Europäisches Patentamt

European Patent Office

Office européen des brevets

(11) Veröffentlichungsnummer : **0 171 572 B1**

# EUROPÄISCHE PATENTSCHRIFT

(45) Veröffentlichungstag der Patentschrift :
28.03.90

(51) Int. Cl.⁵ : **G 03 B 27/02**

(21) Anmeldenummer : 85108144.8

(22) Anmeldetag : 01.07.85

(54) Verfahren zur Herstellung eines Filmkartenduplikats sowie Filmkartenkamera zur Durchführung des Verfahrens.

(30) Priorität : 09.08.84 DE 3429296
05.09.84 DE 3432617
07.05.85 DE 3516265

(43) Veröffentlichungstag der Anmeldung :
19.02.86 Patentblatt 86/08

(45) Bekanntmachung des Hinweises auf die Patenterteilung : 28.03.90 Patentblatt 90/13

(84) Benannte Vertragsstaaten :
AT BE CH DE FR GB IT LI LU NL SE

(56) Entgegenhaltungen :
CH—A— 333 960
DE—A— 3 247 740
GB—A— 908 537
GB—A— 2 006 972
US—A— 3 535 039
US—A— 3 688 656
US—A— 4 185 913

(73) Patentinhaber : Dr. Welp Entwicklungs-KG
Dieselstrasse 9
D-6350 Bad Nauheim (DE)

(72) Erfinder : Welp, Ullrich, Dr.
Steingasse 1
D-6350 Bad Nauheim (DE)
Erfinder : Kramer, Willi, Ing.
Schlesienring 20
D-6368 Bad Vilbel (DE)
Erfinder : Girke, Michael
Grüner Weg 20
D-6350 Bad Nauheim (DE)
Erfinder : Lack, Bernd
Kreuzgasse 12
D-6360 Friedberg (DE)

(74) Vertreter : Schlagwein, Udo, Dipl.-Ing.
Anwaltsbüro Ruppert & Schlagwein Frankfurter
Strasse 34
D-6350 Bad Nauheim (DE)

## Beschreibung

Die Erfindung bezieht sich auf ein Verfahren zur Herstellung eines Filmkartenduplikats. Weiterhin betrifft die Erfindung zwei verschiedene Filmkartenkameras zur Durchführung dieses Verfahrens.

Filmkartenduplikate werden sehr häufig benötigt. Sie werden bisher nach dem Diazoverfahren als Diazoduplikatkarten in Diazoduplizergeräten hergestellt. Diese bestehen aus einer UV-Kontakt-Belichtungsstation und einer NH$_3$-Entwicklungsstation sowie den dazugehörigen Vereinzelungs- und Transporteinrichtungen. Diazo-Duplikatkarten haben den Nachteil, bei häufiger Benutzung in Lese- oder Vergrößerungsgeräten oder bei unsachgemäßer Lagerung, z. B. in UV-haltigem Licht oder bei hoher Temperatur, schnell an Dichte zu verlieren. Dadurch wird ihre Lese- und Kopierqualität stark gemindert. Sie werden dann für viele Zwecke, z. B. automatisches Vergrößern, unbrauchbar.

Bei der Einrichtung von Mikrofilmstellen, z. B. für Zeichnungsspeicherung, müssen bisher außer der Filmkartenkamera auch die teuren Diazo-Kopiergeräte angeschafft werden. Dies bedeutet zusätzlichen Kapitalaufwand und die Einführung eines technisch andersartigen Arbeitsvorganges. Dieser zusätzliche Aufwand wird nur schlecht ausgenutzt, wenn die Zahl der pro Tag benötigten Duplikatkarten gering ist.

Eine typische Filmkartenkamera zum Erstellen von Filmkarten ist beispielsweise in der DE-A-32 47 740 beschrieben. Mit einer solchen Filmkartenkamera werden beispielsweise Originalzeichnungen auf den Film von Filmkarten belichtet. Dieser Film wird anschließend in der Filmkartenkamera entwickelt, fixiert, gewässert und getrocknet, so daß fertige Filmkarten die Filmkartenkamera verlassen können.

In letzter Zeit bedient man sich bei der Erstellung von Zeichnungen immer häufiger des CAD-Computers. CAD-Kameras mit Kathoden- oder Laserstrahlen ermöglichen es, nach einem Computerprogramm mittels des Strahls einen Mikrofilm so zu belichten, daß auf ihn nach dem Entwickeln eine vom Computer erzeugte Zeichnung gespeichert ist. Auch bei solchen CAD-Kameras entstehen Mikrofilmkarten, von denen in aller Regel Duplikatkarten erzeugt werden müssen.

Der Erfindung liegt die Aufgabe zugrunde, ein Verfahren zur Herstellung von dauerhaften Filmkartenduplikaten zu entwickeln, welches mit möglichst wenig apparativem Aufwand und billig durchführbar ist. Weiterhin sollen Kameras zur Durchführung dieses Verfahrens geschaffen werden.

Die erstgenannte Aufgabe wird erfindungsgemäß dadurch gelöst, daß als Duplikatfilm ein Silber-Umkehrfilm verwendet wird und die Entwicklung des Silber-Umkehrfilms in der Entwicklungsstation einer Filmkartenkamera erfolgt.

Bei diesem erfindungsgemäßen Verfahren werden die ohnehin in einer Filmkartenkamera vorhandene Entwicklungsstation und die Transportvorrichtungen auch zum Entwickeln von Filmkartenduplikaten benutzt. Dadurch kann man auf das Anschaffen eines zusätzlichen teuren Gerätes verzichten. Es wird deshalb möglich, mit viel geringerem Apparate- und Kostenaufwand als bei Diazokopiergeräten Filmkartenduplikate zu erzeugen. Dabei wird eine bessere, den Originalkarten entsprechende Qualität und Haltbarkeit der Duplikatkarten erzielt.

Die zweitgenannte Aufgabe, nämlich die Schaffung einer Filmkartenkamera zur Durchführung dieses Verfahrens, wird erfindungsgemäß dadurch gelöst, daß die Kamera zum Zuführen einer außerhalb der optischen Belichtungsstation belichteten Duplikatkarte zur Entwicklungsstation ausgebildet ist. Eine solche Kamera kann durch einfaches Umgestalten einer herkömmlichen Kamera geschaffen werden. Ihre Entwicklung und Herstellung ist durch Zurückgreifen auf bereits vorhandene Bauteile und Bauteilgruppen kostengünstig.

Vorteilhaft ist es, wenn die Kamera einen zusätzlichen Einlaß für zu duplizierende Filmkarten hat und wenn in der Kamera eine Kontaktbelichtungsstation zum Belichten der Duplikatkarten vorgesehen ist. Der gesamte Duplikiervorgang kann bei einer solchen Filmkartenkamera im Kamerakopf erfolgen. Dadurch besteht keine Gefahr, daß noch unentwickelte Filmkarten dem Licht ausgesetzt werden.

Eine andere, vorteilhafte Ausgestaltung der Erfindung besteht darin, die Kontaktbelichtungsstation und den zusätzlichen Einlaß in einem an die Kamera ansetzbaren, separaten Gehäuse vorzusehen. Eine solche Ausführungsform bietet den Vorteil, daß die Kamera auch ohne das separate Gehäuse allein zum Erstellen von Filmkarten benutzt werden kann. Es brauchen bei Einrichtung und Betrieb einer Mikrofilmstelle kein separates Gerät und kein anders arbeitendes Material zum Duplizieren mitgekauft zu werden.

Eine übliche Filmkartenkamera braucht nur sehr geringfügig umgestaltet zu werden, um die erfindungsgemäßen Merkmale zu erhalten, sofern in den Einlaß für die unbelichteten Filmkarten ein Einsatz mit unbelichteten Duplikatkarten, dem zusätzlichen Einlaß und einer Positionierungseinrichtung für die zu duplizierende Filmkarte einsetzbar ist.

Günstig ist es auch, wenn zwischen Entwicklungsstation und Kartenauslauf ein automatisch abtastendes Dichtemeßgerät eingebaut ist. Dadurch erhält man eine viel schnellere und bessere Qualitätskontrolle der Duplikatkarten, als sie bisher bekannt ist. Das Dichtemeßgerät wird genau wie die Entwicklungsstation sowohl für die Originalfilmkarten als auch für die Duplikatkarten genutzt.

Vorteilhaft ist es auch, wenn in der Filmkartenkamera eine Beschriftungsstation für die Filmkarte vorgesehen ist. Eine solche Beschriftungsstation erlaubt es, sowohl die Originalfilmkarten als auch Duplikatkarten zu beschriften. Mithin wird auch die Beschriftungsstation einer solchen Kamera genau wie die Entwicklungsstation, die Transporteinrichtung und die Prüfstation zweifach genutzt.

Eine andere, günstige Ausgestaltung der Erfindung besteht darin, daß die Beschriftungsstation auf beiden Seiten der Filmkarte einen Nadeldrucker hat. Mit einer solchen Filmkartenkamera ist auch eine positionsrichtige Beschriftung der Duplikatkarten jeder geradzahligen Generation möglich.

Konstruktiv besonders einfach gestaltet sich die Beschriftungsstation, wenn sie zum Beschriften der Kopfleiste einer Filmkarte ausgebildet ist. Es hat sich gezeigt, daß es mit maschinenlesbarer Schrift möglich ist, mehr als den gesamten Informationsgehalt der Lochung einer bisherigen Lochkarte auf der Kopfleiste unterzubringen.

Die Beschriftung muß beim Duplizieren nicht jedesmal neu eingegeben werden, wenn die Filmkartenkamera einen Lesekopf hat.

Da bei Duplikatkarten im Gegensatz zu den Original-Filmkarten die Beschriftung auf der Schichtseite erfolgen muß und die Kontaktbelichtung Schicht auf Schicht zu erfolgen hat, ergibt sich die Notwendigkeit, in der Beschriftungsstation die Duplikatkarten von unten und die Original-Filmkarten von oben her zu beschriften, was bei der zuvor beschriebenen Filmkartenkamera durch zwei Druckwerke ermöglicht wird. Durch das zusätzliche Druckwerk wird die Filmkartenkamera gegenüber einer Filmkartenkamera ohne die Möglichkeit der Erstellung von Duplikatkarten beträchtlich teurer. Dieser Mehraufwand kann jedoch eingespart werden, wenn gemäß einer anderen Ausgestaltung der Erfindung die Beschriftungsstation zwischen dem Einlaß für die unbelichteten Filmkarten bzw. Duplikatkarten und der Kontaktbelichtungsstation vorgesehen ist, und wenn sich zwischen der Kontaktbelichtungsstation und der Entwicklungsstation eine Wendestation für die Duplikatkarten befindet.

Durch diese erfindungsgemäße Gestaltung können für das Duplizieren in den Einlaß der Filmkartenkamera Duplikatkarten mit der beschichteten Seite nach oben eingegeben werden. Da Duplikatkarten auf der Schichtseite, die Original-Filmkarten jedoch auf der der Schicht gegenüberliegenden Seite, beschriftet werden müssen, genügt in der erfindungsgemäßen Filmkartenkamera ein einziges Druckwerk, welches sowohl die noch unbelichteten Filmkarten, als auch die Duplikatkarten von oben her beschriftet. Dadurch ist die Filmkartenkamera wesentlich kostengünstiger herzustellen als eine Kamera mit zwei Druckwerken.

Eine weitere Kostenminderung läßt sich erzielen, wenn der Einlaß für die Filmkarten bzw. Duplikatkarten zur wahlweisen Aufnahme eines Magazins mit unbelichteten Filmkarten oder Duplikatkarten ausgebildet ist, wobei die fotografische Schicht der Duplikatkarten nach oben und die der Filmkarten nach unten weist.

Bei einer solchen Ausgestaltung können sowohl die unbelichteten Filmkarten als auch die unbelichteten Duplikatkarten mit einer einzigen ohnehin erforderlichen Vorrichtung oben vom Kartenstapel aus dem Magazin abgezogen und anschließend zunächst der Beschriftungsstation zugeführt werden. Abgesehen von der Kostenersparnis ergibt es sich durch die Verwendung identischer Magazine, daß die Filmkartenkamera noch kompakter wird.

Der Platz in üblichen Filmkartenkameras wird optimal ausgenutzt, wenn die Kontaktbelichtungsstation oberhalb der Bewegungsbahn der Filmkarten vorgesehen ist und sich der Einlaß für die zu duplizierenden Filmkarten entsprechend an der Oberseite der Filmkartenkamera befindet. Abgesehen von diesem Vorteil ist es von der Handhabung der Filmkartenkamera beim Duplizieren auch günstig, wenn die zu duplizierenden Original-Filmkarten von oben her in die Kamera einzuschieben und nach oben aus ihr herauszuziehen sind.

Eine andere, vorteilhafte Ausgestaltung der Erfindung besteht darin, daß zum Transport der Duplikatkarten von der vom Filmkartenmagazin über die Beschriftungsstation und die Belichtungsstation zur Entwicklungsstation verlaufenden Bewegungsbahn der Filmkarten zur Kontaktbelichtungsstation und wieder zurück zu dieser Bewegungsbahn jeweils eine bogenförmig gekrümmte, zur Kontaktbelichtungsstation gerichtete Führungsbahn vorgesehen ist. Diese Führungsbahnen stellen zugleich die Wendestation dar, da die Duplikatkarten durch das Hochfahren auf der einen Führungsbahn und das Herunterfahren auf der anderen zwangsläufig gewendet werden, so daß ihre Schicht beim Einlaufen in die Entwicklungsstation wieder nach unten weist. Natürlich muß sichergestellt werden, daß die Duplikatkarten beim Herausfahren aus der Kontaktbelichtungsstation nicht wieder in die selbe Führungsbahn gelangen, was zum Beispiel durch eine Weiche oder auch dadurch geschehen kann, daß die Duplikatkarten beim Hochfahren auf Grund ihrer Eigenelastizität mit ihrem unteren Ende von der einen in die andere Führungsbahn springen. Ein besonderer Vorteil dieser Führungsbahnen als Wendestation liegt auch darin, daß die Duplikatkarten stets an einer ihrer beiden Normkanten geführt werden.

Die zu duplizierenden Filmkarten können jeweils einzeln von Hand in den zusätzlichen Einlaß mit dem Filmfenster bis in die Kontaktbelichtungsstation eingeschoben und nach der Belichtung wieder von Hand herausgezogen werden, wenn die Kontaktbelichtungsstation so hoch in der Filmkartenkamera angeordnet ist, daß während des Kontaktbelichtens die zu duplizierende Filmkarte mit einem dem Filmfenster abgewandten Pappende in den zusätzlichen Einlaß oder aus ihm heraus ragt.

Um sicherzustellen, daß nicht versehentlich die Duplikatkarte am zusätzlichen Einlaß aus der Filmkartenkamera herausgezogen werden kann, ist es zweckmäßig, nahe des zusätzlichen Einlasses eine Trennvorrichtung vorzusehen, durch die die zu belichtende Duplikatkarte mit ihrem dem Filmfenster abgewandten Pappende von der zu duplizierenden Filmkarte weg gebogen wird.

Bei der Zeichnungsverfilmung weiß man häufig von vornherein, daß mehrere identische Mikrofilmkarten mit Silberfilmqualität benötigt werden. Bei der Verfilmung einer Zeichnung kann man dann sofort mehrere Aufnahmen hintereinander machen, um mehrere identische Original-filmkarten zu erzeugen. Eine solche Möglichkeit läßt sich bei einer CAD-Mikrofilm-Kamera jedoch mit den bekannten Mitteln wirtschaftlich nicht durchführen, weil die CAD-Zeichnungsübertragung je nach Zeichnungsgröße und Informationsdichte bis zu 15 Minuten dauert. Man ist dann wieder darauf angewiesen, in separaten Geräten die Duplikatkarten zu erstellen. Dieser Aufwand kann jedoch bei einer CAD-Mikrofilm-Kamera vermieden werden, wenn in der Kamera zusätzlich eine Kontaktbelichtungsstation zum Belichten von Duplikatkarten vorgesehen ist und die Filmkartenkamera Transportmittel zum Fördern der Duplikatkarte von einem Kartenstapel zur Kontaktbelichtungsstation, dann zur Entwicklungsstation und danach zum Filmkartenauslauf hat.

Eine solche CAD-Mikrofilmkamera vereinigt alle erforderlichen Einrichtungen in einem Gerät. Sie ist deshalb besonders bedienfreundlich und wirtschaftlich. Wärend der CAD-Zeichnungsübertragung können in ihr Silberduplikatkarten erstellt, beschriftet und ihre Dichte abgetastet werden. Die Kartensatzerstellung kann während der Laser- oder Kathodenstrahlübertragung der nächsten Filmkarte geschehen. Ein selbsttätiges Arbeiten der Kamera ist ohne weiteres möglich.

Für den Arbeitsablauf besonders vorteilhaft ist es, wenn an der CAD-Mikrofilm-Kamera zwei voneinander getrennte Filmkartenausläufe vorgesehen sind, von denen ein Filmkartenauslauf für Originalfilmkarten und einer für Duplikatkarten vorgesehen ist.

Bei einer solchen CAD-Mikrofilm-Kamera lassen sich die Duplikatkarten mit geringem Aufwand der Entwicklungsstation zuführen, wenn zwischen der Kontaktbelichtungsstation und der Entwicklungsstation eine Wendestation vorgesehen ist.

Sowohl die Originalfilmkarten als auch die Duplikatkarten können von einer Beschriftungsstation mit nur einem Druckwerk beschriftet werden, wenn die Beschriftungsstation zwischen der Kontaktbelichtungsstation und der Wendestation vorgesehen ist.

Eine Dichtekontrolle aller erzeugten Filmkarten ist möglich, wenn zwischen der Entwicklungsstation und der Wendestation ein automatisch abtastendes Dichtemeßgerät angeordnet ist.

Die Erfindung läßt zahlreiche Ausführungsmöglichkeiten zu. Zur Erläuterung ihres Grundprinzips sind drei verschiedene Mikrofilmkameras stark schematisch in der Zeichnung dargestellt und werden nachfolgend beschrieben. Die Zeichnung zeigt in

Fig. 1 eine erste Ausführungsform einer erfindungsgemäßen Filmkartenkamera,

Fig. 2 eine zweite Ausführungsform einer erfindungsgemäßen Filmkartenkamera,

Fig. 3 eine als CAD-Filmkartenkamera ausgebildete Filmkartenkamera gemäß der Erfindung.

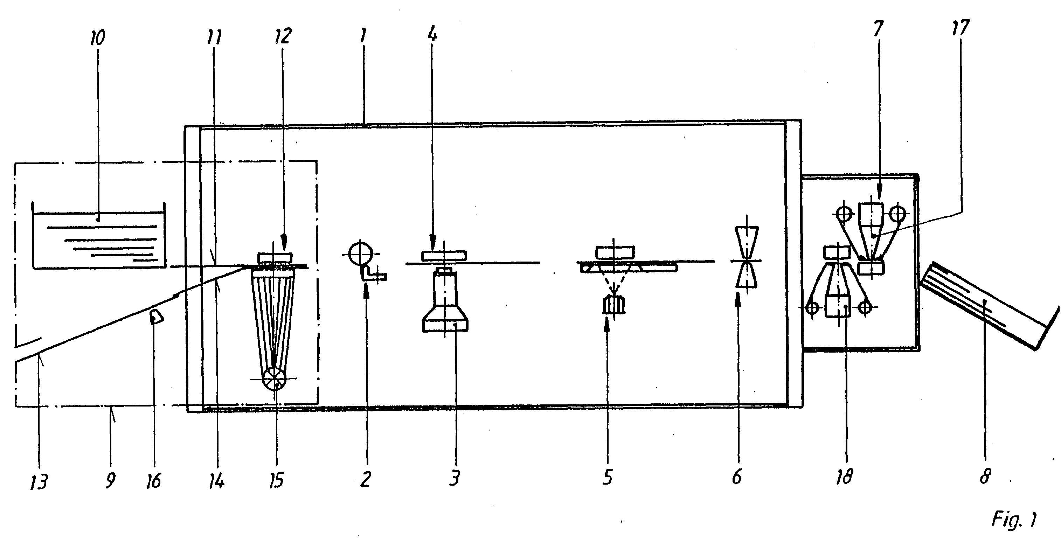

Die Figur 1 zeigt ein Gehäuse 1 einer Filmkartenkamera. Nicht dargestellt ist ein Filmkarteneinlaß an der linken Seite des Gehäuses 1. Angedeutet sind jedoch im Inneren des Gehäuses eine Vereinzelungsvorrichtung 2, eine ein Objektiv 3 aufweisende optische Belichtungsstation 4, eine Entwicklungsstation 5 für Silberfilme, eine ein automatisch abtastendes Dichtemeßgerät aufweisende Prüfstation 6, eine Beschriftungsstation 7 sowie ein Filmkartenauslauf 8. Eine in das Gehäuse 1 einlaufende Filmkarte wird in der Belichtungsstation 4 belichtet, anschließend in der Entwicklungsstation 5 von unten her mit Behandlungsflüssigkeit besprüht und dadurch entwickelt, fixiert, gewässert und getrocknet. Die nachfolgende Prüfstation enthält ein automatisch abtastendes Dichtemeßgerät und dient der Bestimmung der optischen Dichte. Die Beschriftungsstation 7 hat auf beiden Seiten der Filmkarte jeweils einen Nadeldrucker 17, 18. Je nachdem um welche Duplikatkartengeneration es sich handelt, wird der eine oder andere Nadeldrucker 17, 18 aktiv, um die Kopfleiste der Filmkarte positionsrichtig zu beschriften.

Für die Erfindung wesentlich ist ein Einsatz 9, der statt des üblicherweise benutzten Filmkartenmagazins mit unbelichteten Filmkarten von links her in das Gehäuse der Filmkartenkamera eingesetzt ist. In diesem Einsatz 9 befindet sich ein Filmkartenmagazin 10, aus dem heraus Duplikatkarten 11 einzeln zu einer Kontaktbelichtungsstation 12 transportiert werden können. Bei diesen Duplikatkarten handelt es sich um Karten mit einem Silber-Umkehrfilm. Der Einsatz 9 hat des weiteren einen Einlaß 13, in den hinein für jeden Dupliziervorgang jeweils die zu duplizierende Originalfilmkarte geschoben wird. In der Kontaktbelichtungsstation liegen die Originalfilmkarte 14 und eine unbelichtete Duplikatkarte 11 Schicht auf Schicht aufeinander und werden durch das Licht einer Lampe 15 im Kontaktverfahren belichtet.

Anschließend durchläuft die Duplikatkarte 11 genau wie bei der Mikroverfilmung die einzelnen Stationen der Kamera bis sie zum Filmkartenauslauf 8 gelangt, wobei natürlich ein erneutes Belichten in der optischen Belichtungsstation 4 unterbleibt. Die positionsrichtige Beschriftung der Duplikatkarte der zweiten Generation erfolgt dann mittels des Nadeldruckers 18. Die Originalfilmkarte 14 kann nach der Kontaktbelichtung zurück zum Einlaß 13 transportiert werden.

Möglich ist es auch, in dem Einsatz 9 einen Lesekopf 16 vorzusehen, der die Beschriftung der Originalfilmkarten liest und es dadurch ermöglicht, daß in der Beschriftungsstation 7 die Duplikatfilmkarten automatisch entsprechend der Originalfilmkarten beschriftet werden.

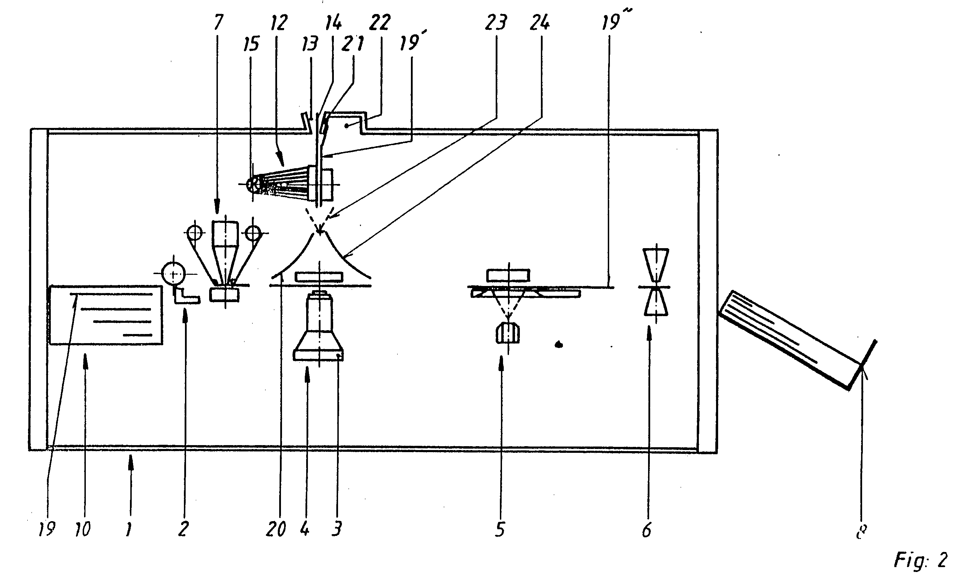

Die in der Figur 2 dargestellte Filmkartenkamera hat genau wie die nach Figur 1 ein Gehäuse 1, in dem eine Vereinzelungsvorrichtung 2, eine ein Objektiv 3 aufweisende Belichtungsstation 4, eine Entwicklungsstation 5, eine Prüfstation 6, eine Beschriftungsstation 7 und eine Kontaktbelichtungsstation 12 untergebracht sind. Die Kontaktbelichtungsstation 12 hat eine Lampe 15 zum Durchstrahlen einer in einem Einlaß 13 einzuschiebenden und in der Filmkartenkamera zu duplizierenden Original-Filmkarte 14.

In die Filmkartenkamera ist von links her ein Magazin 10 eingesetzt. Falls mit der Filmkartenkamera dupliziert werden soll, enthält das Magazin 10 Duplikatkarten 19, welche mit ihrer Schicht nach oben weisen. Wird die Filmkartenkamera zum Erstellen von Original-Filmkarten verwendet, dann ist in ihr ein identisches Magazin 10 mit unbelichteten Filmkarten einzusetzen, wobei die Schicht dieser Filmkarten nach unten weisen muß.

Hinter dem Magazin 10 befindet sich die bereits erwähnte Vereinzelungsvorrichtung 2, mit der jeweils eine Duplikatkarte 19 bzw. eine unbelichtete Filmkarte dem Magazin 10 entnommen werden kann. Im Gegensatz zur vorher beschriebenen Ausführungsform folgt unmittelbar danach die Beschriftungsstation 7, in der mit einem einzigen Druckwerk sowohl Duplikatkarten 19 als auch Filmkarten von oben her beschriftet werden können.

Im Anschluß an die Beschriftungsstation 7 werden die Duplikatkarten 19 mittels einer bogenförmigen Führungsbahn 20 nach oben zu der Kontaktbelichtungsstation 12 transportiert. Diese Kontaktbelichtungsstation befindet sich oberhalb der Belichtungsstation 4 und unterhalb des Einlasses 13. Die Duplikatkarte 19 gelangt mit ihrer Schicht nach links weisend derart in die Kontaktbelichtungsstation 12, daß ihr dem Filmfenster abgewandtes Pappende von einer Trennvorrichtung 21 nach rechts weggebogen werden kann, bis daß es in eine obere Gehäuseausbuchtung 22 ragt. Die zu duplizierende Original-Filmkarte ragt während der Kontaktbelichtung mit ihrem Pappende derart in den Einlaß 13 hinein oder aus ihm heraus, daß es von Hand gegriffen werden kann.

Ist die Kontaktbelichtung erfolgt, so gelangt die Duplikatkarte 19' durch eine Weiche 23 oder auf sonstige Weise in eine spiegelbildlich zur Führungsbahn 20 verlaufende, zurück zur Bewegungsbahn der Filmkarten führende, ebenfalls bogenförmig gekrümmte Führungsbahn 24. Das hat zur Folge, daß die Duplikatkarte 19" in der Entwicklungsstation 5 mit ihrer Schicht nach unten weist und genau wie eine Original-Filmkarte entwickelt, fixiert, gewässert und getrocknet werden kann. Nach Passieren der Prüfstation 6 gelangt die Duplikatkarte 19, 19', 19" in den Filmkartenauslauf an der rechten Seite der Filmkartenkamera.

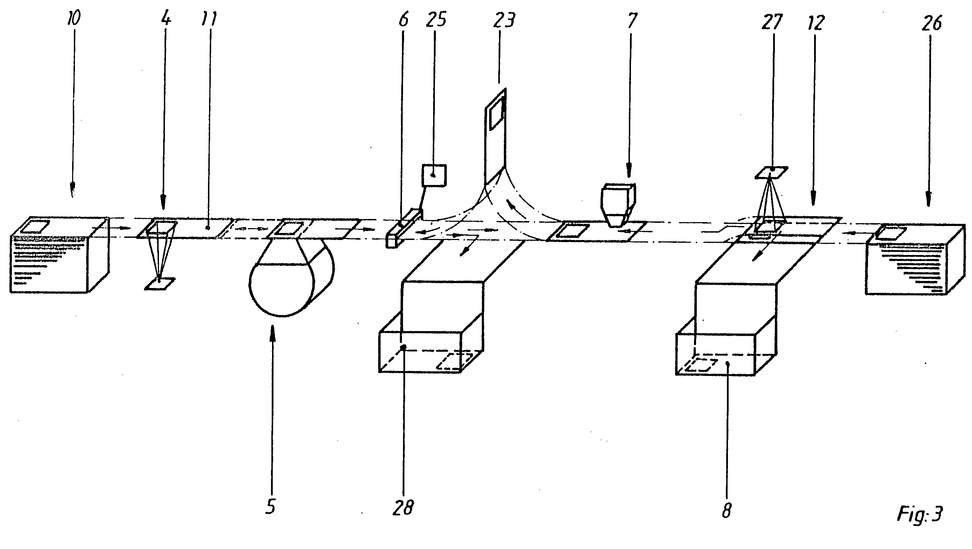

Die Figur 3 zeigt eine CAD-Mikrofilmkamera. Mit ihr werden Zeichnungen nicht fotografisch aufgenommen, sondern in der Belichtungsstation 4 mittels eines computergesteuerten Laser- oder Kathodenstrahls aufbelichtet, nachdem zuvor eine Filmkarte 11 von einem Filmkartenmagazin 10 der Belichtungsstation 4 zugeführt wurde. Danach wird die Filmkarte 11 zur Entwicklungsstation 5 transportiert, wo sie entwickelt, fixiert, gewässert und getrocknet wird. Danach gleitet sie durch die Prüfstation 6, wo die optische Dichte ermittelt wird. Der ermittelte Wert wird digital an einer Anzeige 25 sofort angezeigt. Falls die Dichte des Negativs außerhalb einstellbarer Unter- und Oberwerte liegt, kann ein akustisches Signal ertönen. Dadurch wird die Bedienperson auf die Abweichung aufmerksam und kann eingreifen. Die Mikrofilmkarte 11 gleitet dann unter der Beschriftungsstation 7 hindurch. Dort wird ihr oberer Rand mit maschinenlesbarer OCR-Schrift beschriftet, so daß der Inhalt des Kartenfilmbildes aus dieser Beschriftung erkennbar ist.

Zum Duplizieren gleitet die Filmkarte 11 auf die Kontaktbelichtungsstation 12, wo sie mit der Filmschicht nach oben liegenbleibt. Von einem Stapel 26 mit unbelichteten Duplikatkarten fährt eine Duplikatkarte mit der Schacht nach oben unter die zu duplizierende Filmkarte in die Kontaktbelichtungsstation 12. Nach Belichtung durch eine Lichtquelle 27 fährt die belichtete Duplikatkarte unter die Beschriftungsstation 7 hindurch, wo sie mit dem gleichen Text und an derselben Stelle beschriftet wird, wie vorher die Originalfilmkarte. Sie gleitet dann über eine als Kartenweiche ausgebildete Wendestation 23. Dort gelangt sie zunächst in eine senkrechte Position, aus der sie rückwärts auf die Entwicklungsstation 5 fährt. Dort wird sie in gleicher Weise wie die Originalfilmkarte entwickelt. Anschließend fährt sie durch die Prüfstation 6 in einen Filmkartenauslauf 28 für Duplikatkarten. Die Originalkarte 11 fährt nach Beendigung der Belichtung der Duplikakarten in den Filmkartenauslauf 8.

Nicht dargestellt ist, daß die CAD-Mikrofilm-Kamera nach Figur 3, genau wie die zuvor beschriebenen Mikrofilm-kameras einen zusätzlichen Einlaß haben kann, durch den es möglich wird, in ihr Filmkarten zu duplizieren, die in einer anderen Kamera erzeugt wurden. Ebenso kann eine OCR-Lesestation eingebaut sein, um Duplikatkarten beschriften zu können.

Auflistung der verwendeten Positionszahlen

1 Gehäuse
2 Vereinzelungsvorrichtung
3 Objektiv
4 Belichtungsstation
5 Entwicklungsstation
6 Prüfstation
7 Beschriftungsstation
8 Filmkartenauslauf
9 Einsatz
10 Filmkartenmagazin
11 Filmkarte
12 Kontaktbelichtungsstation
13 Einlaß
14 Originalfilmkarte
15 Lampe
16 Lesekopf

17 Nadeldrucker
18 Nadeldrucker
19 Duplikatkarte
20 Führungsbahn
21 Trennvorrichtung
22 Gehäuseausbuchtung
23 Wendestation
24 Führungsbahn
25 Anzeige
26 Stapel
27 Lichtquelle
28 Filmkartenauslauf

**Patentansprüche**

1. Verfahren zur Herstellung eines Filmkartenduplikats, dadurch gekennzeichnet, daß als Duplikatfilm ein Silber-Umkehrfilm verwendet wird und die Entwicklung des belichteten Silber-Umkehrfilms in der Entwicklungsstation einer Filmkartenkamera erfolgt.

2. Filmkartenkamera zur Durchführung des Verfahrens nach Anspruch 1, mit einem Einlaß für unbelichtete Filmkarten, einer ein Objektiv aufweisenden Belichtungsstation, einer Entwicklungsstation und einem Filmkartenauslauf, dadurch gekennzeichnet, daß die Kamera zum Zuführen einer außerhalb der optischen Belichtungsstation (4) belichteten Duplikatkarte zur Entwicklungsstation (5) ausgebildet ist.

3. Filmkartenkamera nach Anspruch 2, dadurch gekennzeichnet, daß die Kamera einen zusätzlichen Einlaß (13) für zu duplizierende Filmkarten (14) hat und daß in der Kamera eine Kontaktbelichtungsstation (12) zum Belichten der Duplikatkarten (11) vorgesehen ist.

4. Filkartenkamera nach Anspruch 2 oder einem der folgenden, dadurch gekennzeichnet, daß die Kontaktbelichtungsstation (12) und der zusätzliche Einlaß (13) in einem an die Kamera ansetzbaren, separaten Gehäuse vorgesehen sind.

5. Filmkartenkamera nach Anspruch 2 oder einem der folgenden, gekennzeichnet durch einen in den Einlaß für die unbelichteten Filmkarten einsetzbaren Einsatz (9) mit unbelichteten Duplikatkarten (11), dem zusätzlichen Einlaß (13) und einer Positionierungseinrichtung für die zu duplizierende Originalfilmkarte (14).

6. Filmkartenkamera nach Anspruch 2 oder einem der folgenden, dadurch gekennzeichnet, daß zwischen Entwicklungsstation (5) und Kartenauslauf (8) ein automatisch abtastendes Dichtemeßgerät (Prüfstation 6) eingebaut ist.

7. Filmkartenkamera nach Anspruch 2 oder einem der folgenden, dadurch gekennzeichnet, daß in ihr eine Beschriftungsstation (7) für die Filmkarte vorgesehen ist.

8. Filmkartenkamera nach Anspruch 2 oder einem der folgenden, dadurch gekennzeichnet, daß die Beschriftungsstation (7) auf beiden Seiten der Filmkarte einen Nadeldrucker (17, 18) hat.

9. Filmkartenkamera nach Anspruch 2 oder einem der folgenden, dadurch gekennzeichnet, daß die Beschriftungsstation (7) zum Beschriften der Kopfleiste einer Filmkarte ausgebildet ist.

10. Filmkartenkamera nach Anspruch 2 oder einem der folgenden, dadurch gekennzeichnet, daß in ihr ein Lesekopf (16) zum Lesen der Beschriftung der Originalfilmkarten (14) vorgesehen ist.

11. Filmkartenkamera nach den Ansprüchen 3 und 7, dadurch gekennzeichnet, daß die Beschriftungsstation (7) zwischen dem Einlaß für die unbelichteten Filmkarten bzw. Duplikatkarten (19) und der Kontaktbelichtungsstation (12) vorgesehen ist und daß sich zwischen der Kontaktbelichtungsstation (12) und der Entwicklungsstation (5) eine Wendestation (Führungsbahnen 20, 24, Weiche 23) für die Duplikatkarten befindet.

12. Filmkartenkamera nach Anspruch 11, dadurch gekennzeichnet, daß der Einlaß für die Filmkarten bzw. Duplikatkarten (19) zur wahlweisen Aufnahme eines Magazins (10) mit unbelichteten Filmkarten oder Duplikatkarten (19) ausgebildet ist, wobei die fotografische Schicht der Duplikatkarten (19) nach oben und die der Filmkarten nach unten weist.

13. Filmkartenkamera nach den Ansprüchen 11 oder 12, dadurch gekennzeichnet, daß die Kontaktbelichtungsstation (12) oberhalb der Bewegungsbahn der Filmkarten vorgesehen und sich der Einlaß (13) für die zu duplizierenden Filmkarten (14) entsprechend an der Oberseite der Filmkartenkamera befindet.

14. Filmkartenkamera nach Anspruch 11 oder einem der folgenden, dadurch gekennzeichnet, daß zum Transport der Duplikatkarten (19) von der vom Filmkartenmagazin (10) über die Beschriftungsstation (7) und die Belichtungsstation (4) zur Entwicklungsstation (5) verlaufenden Bewegungsbahn der Filmkarten zur Kontaktbelichtungsstation (12) und wieder zurück zu dieser Bewegungsbahn jeweils eine bogenförmig gekrümmte, zur Kontaktbelichtungsstation (12) gerichtete Führungsbahn (20, 24) vorgesehen ist.

15. Filmkartenkamera nach Anspruch 11 oder einem der folgenden, dadurch gekennzeichnet, daß die Kontaktbelichtungsstation (12) so hoch in der Filmkartenkamera angeordnet ist, daß während des Kontaktbelichtens die zu duplizierende Filmkarte (14) mit einem dem Filmfenster abgewandten Pappende in den zusätzlichen Einlaß (13) oder aus ihm heraus ragt.

16. Filmkartenkamera nach Anspruch 11 oder einem der folgenden, dadurch gekennzeichnet, daß nahe des zusätzlichen Einlasses (13) eine Trennvorrichtung (21) vorgesehen ist, durch die die zu belichtende Duplikatkarte (19') mit ihrem dem Filmfenster abgewandten Pappende von der zu duplizierenden Filmkarte (14) weg gebogen wird.

17. Filmkartenkamera zur Durchführung des Verfahrens nach Anspruch 1, mit einem Einlaß für unbelichtete Filmkarten, einer CAD-Belichtungsstation, einer Entwicklungsstation und einem Filmkartenauslauf, dadurch gekennzeichnet, daß in ihr zusätzlich eine Kontaktbelichtungsstation (12) zum Belichten von Duplikatkarten vorgesehen ist und die Filmkartenkamera Transportmittel zum Fördern der Duplikatkarte von einem Kartenstapel (26) zur Kontaktbelichtungsstation (12), dann zur Entwicklungsstation (5) und danach zum Filmkartenauslauf (28) hat.

18. Filmkartenkamera nach Anspruch 17, dadurch gekennzeichnet, daß zwei voneinander getrennte Filmkartenausläufe (8, 28) vorgesehen sind, von denen ein Filmkartenauslauf (8) für Originalfilmkarten und ein Filmkartenauslauf (28) für Duplikatkarten vorgesehen ist.

19. Filmkartenkamera nach den Ansprüchen 17 oder 18, dadurch gekennzeichnet, daß zwischen der Kontaktbelichtungsstation (12) und der Entwicklungsstation (5) eine Wendestation (23) vorgesehen ist.

20. Filmkartenkamera nach Anspruch 19, dadurch gekennzeichnet, daß zwischen der Kontaktbelichtungsstation (12) und der Wendestation (23) eine Beschriftungsstation (7) vorgesehen ist.

21. Filmkartenkamera nach Anspruch 19 oder 20, dadurch gekennzeichnet, daß zwischen der Entwicklungsstation (5) und der Wendestation (23) eine Prüfstation (6) mit einem automatisch abtastenden Dichtemeßgerät angeordnet ist.

## Claims

1. A method for marking a duplicate of an aperture card, characterised in that a silver reversal film is used as duplicate film and the exposed silver reversal film is developed in the developing station of an aperture card camera.

2. An aperture card camera for carrying out the method according to claim 1, with an inlet for unexposed aperture cards, an exposure station having a lens, a developing station and an aperture card outlet, characterised in that the camera is designed for supplying a duplicate card exposed outside the optical exposure station (4) to the developing station (5).

3. An aperture card camera according to claim 2, characterised in that the camera has an additional inlet (13) for aperture cards (14) to be duplicated and in that a contact exposure station (12) for exposing the duplicate cards (11) is provided in the camera.

4. An aperture card camera according to claim 2 or one of the following claims, characterised in that the contact exposure station (12) and the additional inlet (13) are provided in a separate housing which can be placed onto the camera.

5. An aperture card camera according to claim 2 or one of the following claims, characterised by an insert (9), which can be inserted into the inlet for the unexposed aperture cards, with unexposed duplicate cards (11), the additional inlet (13) and a positioning device for the original aperture card (14) to be duplicated.

6. An aperture card camera according to claim 2 or one of the following claims, characterised in that an automatically scanning density measuring device (testing station (6)) is installed between developing station (5) and card outlet (8).

7. An aperture card camera according to claim 2 or one of the following claims, characterised in that a marking station (7) for the aperture card is provided therein.

8. An aperture card camera according to claim 2 or one of the following claims, characterised in that the marking station (7) has a wire printer (17, 18) on both sides of the aperture card.

9. An aperture card camera according to claim 2 or one of the following claims, characterised in that the marking station (7) is designed for marking the head strip of an aperture card.

10. An aperture card camera according to claim 2 or one of the following claims, characterised in that a reading head (16) for reading the marking of the original aperture cards (14) is provided therein.

11. An aperture card camera according to claims 3 and 7, characterised in that the marking station (7) is provided between the inlet for the unexposed aperture cards or duplicate cards (19) and the contact exposure station (12) and in that a turning station (guiding tracks 20, 24, points 23) for the duplicate cards is located between the contact exposure station (12) and the developing station (5).

12. An aperture card camera according to claim 11, characterised in that the inlet for the aperture cards or duplicate cards (19) is constructed for selectively receiving a magazine (10) with unexposed aperture cards or duplicate cards (19), the photographic layer of the duplicate cards (19) pointing upward and that of the aperture cards pointing downward.

13. An aperture card camera according to claims 11 or 12, characterised in that the contact exposure station (12) is provided above the path of movement of the aperture cards and the inlet (13) for the aperture cards (14) to be duplicated is accordingly located on the upper side of the aperture card camera.

14. An aperture card camera according to claim 11 or one of the following claims, characterised in that a guide track (20, 24) which is curved in an arc shape and is directed toward the contact exposure station (12) is provided in each case for conveying the duplicate cards (19) from the path of movement of the aperture cards, extending from the aperture card magazine (10) via the marking station (7) and the exposure station (4) to the developing station (5), to the contact exposure station (12) and back again to this path of movement.

15. An aperture card camera according to claim 11 or one of the following claims, characterised in that the contact exposure station (12) is arranged at such a height in the aperture card camera that, during contact exposure, the aperture card (14) to be duplicated projects with a cardboard end remote from the film window into the additional inlet (13) or out of it.

16. An aperture card camera according to claim 11 or one of the following claims, characterised in that, in the region of the additional inlet (13) there is provided a separating device (21) by means of which the duplicate card (19) to be exposed is bent with its cardboard end remote from the film window away from the aperture card (14) to be duplicated.

17. An aperture card camera for carrying out the method according to claim 1, with an inlet for unexposed aperture cards, a CAD exposure station, a developing station and an aperture card outlet, characterised in that a contact exposure station (12) for exposing duplicate cards is additionally provided therein and the aperture card camera has conveying means for conveying the duplicate card from a card stack (26) to the contact exposure station (12), then to the developing station (5) and subsequently to the aperture card outlet (28).

18. An aperture card camera according to claim 17, characterised in that two aperture card outlets (8, 28) which are separated from one another are provided, of which one aperture card outlet (8) is provided for original aperture cards and one aperture card outlet (28) is provided for duplicate cards.

19. An aperture card camera according to claims 17 or 18, characterised in that a turning station (23) is provided between the contact exposure station (12) and the developing station (5).

20. An aperture card camera according to claim 19, characterised in that a marking station (7) is provided between the contact exposure station (12) and the turning station (23).

21. An aperture card camera according to claim 19 or 20, characterised in that a testing station (6) with an automatically scanning density measuring device is arranged between the developing station (5) and the turning station (23).

**Revendications**

1. Procédé pour la fabrication d'un double de carte à microfilm, caractérisé en ce que comme film double un film inversible argenté est utilisé et le développement du film inversible argenté après l'exposition est mis en œuvre dans la station de développement d'une caméra à cartes microfilm.

2. Caméra à cartes microfilm pour mise en œuvre du procédé d'après la revendication 1, avec une admission pour cartes microfilm non exposées, une station d'exposition avec un objectif, une station de développement et une sortie de cartes microfilms, caractérisée en ce que la caméra est construite pour laisser entrer une carte double, exposée à l'extérieur de la station optique d'exposition (4) dans une station de développement (5).

3. Caméra à cartes microfilm selon la revendication 2, caractérisée en ce que la caméra a une admission supplémentaire (13) pour les cartes à films (14), qui doivent être reproduites et que dans la caméra une station d'exposition de contact (12) est prévue pour l'exposition des cartes doubles (11).

4. Caméra à cartes microfilm selon la revendication 2 ou une des suivantes, caractérisée en ce que la station d'exposition de contact (12) et l'admission supplémentaire (13) sont prévues dans un boîtier séparé fixable à la caméra.

5. Caméra à cartes microfilm selon la revendication 2 ou une des suivantes, caractérisée par un insert (9) avec des cartes double non exposées (11), qui peut être fixé dans l'admission et un dispositif de positionnement pour les cartes de film originales à reproduire.

6. Caméra à cartes microfilm selon la revendication 2 ou une des suivantes, caractérisée en ce que qu'entre la station développement (5) et la sortie des cartes (8) un appareil de mesure de densité, de balayage automatique (station d'examination 6) est installé.

7. Caméra à cartes microfilm selon la revendication 2 ou une des suivantes, caractérisée en ce que à l'intérieur une station d'inscription pour la carte de film est prévue.

8. Caméra à cartes microfilm selon la revendication 2 ou une des suivantes, caractérisée en ce que la station d'inscription à sur les deux côtés de la carte microfilm une imprimante à aiguilles (17, 18).

9. Caméra à cartes microfilm selon la revendication 2 ou une des suivantes, caractérisée en ce que la station d'inscription est construite pour inscription de l'entête d'une carte microfilm.

10. Caméra à cartes microfilm selon la revendication 2 ou une des suivantes, caractérisée en ce que à l'intérieur est prévue une tête de lecture pour la lecture de l'inscription des cartes microfilm original.

11. Caméra à cartes microfilm selon les revendications 3 et 7, caractérisée en ce que la station d'inscription (7) est prévue entre l'admission pour les cartes microfilms non exposées ou les cartes doubles (19) et la station d'exposition de contact (12) et qu'entre la station d'exposition de contact (12) et la station de développement (5) se trouve une station tourrnante (glissières de direction 20, 24 ; aiguillage 23) pour les cartes doubles.

12. Caméra à cartes microfilm selon la revendication 2 ou une des suivantes, caractérisée en ce que l'admission pour les cartes microfilm ou les cartes doubles (19) est construite pour l'obtention d'un magasin (10) des cartes microfilm non exposées ou des cartes doubles (19).

13. Caméra à cartes microfilm selon les revendications 11 ou 12, caractérisée en ce que la station d'exposition de contact (12) est prévue au-dessus de la bande de mouvement des cartes microfilm et que l'admission (13) pour les cartes microfilm à reproduire (14) en question se trouve en haut de la caméra microfilm.

14. Caméra à cartes microfilm selon la revendication 11 ou une des suivantes, caractérisée en ce que peur le transport des cartes doubles (19) du magasin des cartes microfilm (10) par la station d'inscription (7) et la station d'exposition (4) à la station de développement (5) sur la bande de mouvement des cartes microfilm à la station d'exposition de contact (12) et retour à cette bande de mouvement respectivement une glissière de direction (20, 24) courbée en forme d'arc est prévue.

15. Caméra à cartes microfilm selon la revendication 11 ou une des suivantes, caractérisée en ce que la station d'exposition de contact (12) est mise en place aussi haut dans la caméra microfilm que pendant l'exposition de contacte la carte, qui doit être reproduite, est introduite dans l'admission supplémentaire (13) ou la dépasse avec la fin du carton opposée à la fenêtre.

16. Caméra à cartes microfilm selon la revendication 11 ou une des suivantes, caractérisée en ce que près de l'admission supplémentaire (13) un séparateur (21) est prévu, qui courbe la carte double, qui doit être exposée avec la fin du carton opposée à la fenêtre loin de la carte microfilm, qui doit être reproduite.

17. Caméra à cartes microfilm pour mise en œuvre du procédé selon la revendication 1, avec une admission pour cartes microfilm non exposées, une station d'exposition CAD, une station de développement et une sortie des cartes microfilm, caractérisée en ce que à l'intérieur est prévue une station d'exposition de contact (12) pour l'exposition des cartes doubles et que la caméra à carte microfilm est prévue avec des moyens de transport pour transporter des cartes doubles d'une pile de cartes (26) à la station d'exposition de contact (12), après à la station de développement (5) et ensuite à la sortie des cartes microfilm (28).

18. Caméra à cartes microfilm selon la revendication 17 caractérisée en ce que deux sorties des cartes de films (8, 28) séparées l'une de l'autre sont prévues, desquelles une sortie des cartes microfilm (8) est prévue pour les cartes microfilm originales et une sortie des cartes microfilmes (28 pour cartes doubles.

19. Caméra à cartes microfilm selon la revendication 17 ou 18 caractérisée en ce qu'entre la station d'exposition de contact (12) et la station de développement est prévue une station tournante (23).

20. Caméra à cartes microfilm selon la revendication 19, caractérisée en ce que entre la station d'exposition de contacte (12) et la station tournante (23) une station d'inscription est prévue.

21. Caméra à cartes microfilm selon la revendication 19 ou 20, caractérisée en ce que entre la station de développement (5) et la station tournante (23) une station d'examination (6) avec un appareil de mesure de densité à balayage automatique est prévu.

Fig. 1

Fig. 2

Fig: 3

EP 0 171 572 B1